(19) Europäisches Patentamt
European Patent Office
Office européen des brevets

(11) **EP 1 621 952 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(51) Int Cl.:
*G05D 23/20* (2006.01)    *G05D 23/19* (2006.01)
*F24H 9/20* (2006.01)

(21) Anmeldenummer: **05016372.4**

(22) Anmeldetag: **28.07.2005**

(54) **Verfahren und eine Vorrichtung zum Steuern einer elektrischen Heizungsanlage**

Method and apparatus for controlling an electric heating system

Procédé et dispositif de commande d'une installation de chauffage électrique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.07.2004 DE 102004037310**

(43) Veröffentlichungstag der Anmeldung:
**01.02.2006 Patentblatt 2006/05**

(73) Patentinhaber: **Stiebel Eltron GmbH & Co. KG 37603 Holzminden (DE)**

(72) Erfinder: **Brieger, Klaus-Peter, Dr. 14050 Berlin (DE)**

(56) Entgegenhaltungen:
**EP-A- 0 542 653     DE-C1- 4 432 745**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und eine Vorrichtung zum Steuern einer elektrischen Heizungsanlage mit mindestens einem Wärmespeicher.

Aus dem Stand der Technik ist eine Vielzahl von elektrisch betriebenen Heizungsanlagen bekannt, die über eine Zyklusdauer von in der Regel 24 Stunden in Intervallen mindestens einen Wärmespeicher aufladen, aus dem anschließend dann Wärme in Abhängigkeit von einer vorgegebenen Raum-Soll-Temperatur abgegeben wird. Diverse bekannte Anlagen erlauben hierbei, dass das Aufladen des Wärmespeichers mit Wärmeenergie durch Umwandlung elektrischer Energie zu sogenannten Schwachlastzeiten erfolgt, also zu Perioden mit besonders niedrigem Tarif, den die zu diesen Zeitabschnitten in ihrer Kapazität nicht ausgelasteten Stromversorger für die Entnahme elektrischer Heizenergie anbieten. Derartige Niedrigtarifperioden beginnen in der Regel gegen 22:00 Uhr am Abend und halten bis ca. 6:00 Uhr am nächsten Morgen an. Hieraus leitet sich auch die Bezeichnung Nacht- oder Niedrigtarif für diese Perioden ab, zu denen elektrische Energie zur Umwandlung in Wärme entnommen wird. Außerhalb dieser Perioden ist in den Normaltarif-Perioden für die elektrische Energie ein gegenüber einem Niedrigtarif wesentlich höherer Normaltarif zu entrichten. Während der Normaltarif-Periode wird dann die gespeicherte Wärme aus dem Wärmespeicher im wesentlichen ohne Entnahme elektrischer Energie entnommen, um jeweilige Sollwerte einer Raumtemperatur einzuregeln.

Aufgabe der Steuerung einer jeden modernen Heizungsanlage ist es dabei, einen vorgegebenen jeweiligen Sollwert für eine Raumtemperatur möglichst genau zu erreichen, wobei jedoch der Bedarf an elektrischer Energie optimiert werden soll. Eine derartige Optimierung ist dabei unter den folgenden Aspekten durchzuführen:

1. Der Verbrauch an elektrischer Energie ist zu minimieren,
2. eine Entnahme der benötigten elektrischen Energie hat nach Möglichkeit nur zu den Niedrigtarif-Perioden zu erfolgen und
3. eine vorgegebene Soll-Raumtemperatur ist unter geregelter Abgabe einer gespeicherten Wärmemenge möglichst genau einzuhalten.

Aus der DE 1 091 250 C ist der Ansatz bekannt, wonach eine genauest mögliche Regelung sich nur auf den Bedarf der während einer vorangegangenen Speicherperiode verbrauchten Wärmemenge stützen kann. Dazu wird nach Abschluss der Aufladung des Wärmespeichers bei Abgabe der Wärmeenergie zur Einregelung einer Soll-Raumtemperatur der Wärmebedarf fortlaufend durch eine Summierungsmessung erfasst und als Maß für die dem Wärmespeicher bei der nächsten Ladung zuzuführende Wärmemenge benutzt.

Auf dieser Lehre aufbauend ist aus DE 25 39 065 B2 ein Steuerverfahren bekannt, nach dem eine Aufladung des Wärmespeichers sich nach einer augenblicklich vorliegenden Kerntemperatur und einer zu Beginn einer vorangehenden Heizperiode vorliegenden Kemtemperatur richtet. Eine Anpassung der Aufladung kann durch ein zusätzliches Korrektursignal modifiziert werden, in dem eine die Entladung beeinflussende Kenngröße des Systems abgebildet wird. Als Kenngrößen für ein Korrektursignal werden dabei Parameter herangezogen, die für eine Entladung des Wärmespeichers maßgeblich sind. Als solche werden Änderungen der Raumtemperatur und Änderungen der Außentemperatur angesehen, wobei Änderungen der Außentemperatur sich in bekannter Weise unter zeitlicher Verzögerung auch auf eine Änderung der Raumtemperatur auswirken. Diese Korrekturen werden nach der vorliegenden Lehre erst für einen am Ende der Aufladeperiode liegenden Aufladeendwert berücksichtigt, so dass sich während des Aufladevorgangs ergebende Änderungen der genannten Parameter noch in der Aufladung berücksichtigt werden können.

Die EP 0 542 653 A1 betrifft ein Verfahren und eine Anlage zum Heizen eines Zimmers oder Ähnlichem unter Verwendung von wenigstens einem Speicherheizgerät. Es wird eine einzuspeichemde Wärmemenge gemäß einem Ladesollwert einer Referenzfunktion abhängig von der äußeren, örtlichen Temperatur bestimmt, wobei dieser Ladesollwert korrigiert wird, abhängig von einer tatsächlichen Bedarfskurve des Wärmespeichers.

Dokument DE 44 32 745 C1 betrifft ein Verfahren für den Betrieb einer Speicherheizgerätesteuerung. Das Verfahren berücksichtigt gemäß einer Ausführungsform eine Ladung der Speicherheizung in Abhängigkeit von Hochtarif- und Niedrigtarifperioden der Energieversorgungsunternehmen. Dabei sind Informationen über die zu erwartende Benutzerentladung wünschenswert und hierfür wird vorgeschlagen, bestimmte Kenngrößen des Entladeverlaufs in einem Speicher abzulegen, wie beispielsweise Temperaturwerte des Speicherkerns in bestimmten zeitlichen Abständen, oder falls möglich eine entsprechende mathematische Funktion zu verwenden.

Zusammenfassend wird nach dem Stand der Technik also immer auf den Verbrauch von Wärmeenergie aus dem Wärmespeicher abgestellt. Nachfolgend wird nach dem Stand der Technik auf dieser Basis eine mehr oder weniger vollständige Ergänzung oder aber auch eine Überkompensation der verbrauchten Wärmeenergie im Zuge einer Wiederaufladung bewirkt.

Aufgabe der vorliegenden Erfindung ist es, ein Verfahren und eine dementsprechende Vorrichtung unter Verbesserung der Wirtschaftlichkeit und bei Erhöhung der Regelgenauigkeit hinsichtlich der Einhaltung einer Raum-Soll-Temperatur zu schaffen.

Diese Aufgabe wird durch die Merkmale der jeweiligen unabhängigen Patentansprüche gelöst. Demnach zeichnet sich ein erfindungsgemäßes Verfahren dadurch aus, dass zu Beginn bzw. mit Beginn einer Niedrigtarif-Periode eine Prognose über den Wärmeenergiebedarf einer nächstfolgenden Heiz- bzw. Raumtemperatur-Regelperiode auf der Basis mindestens eines aktuellen Parameterwertes erstellt wird und im Rahmen der Bestimmung einer neuen Wärmeenergie-Bedarfsprognose eine Bewertung der Alt-Prognose durchgeführt wird, also einer für einen zeitlich vorangehenden Regelungszeitraum. In der Regel ist das also eine Heizperiode von 8 bis ca. 20 Uhr eines Vortages. Eine Prognose als Vorhersage eines in der Zukunft liegenden Ereignisses oder Zustands wird erfindungsgemäß also auf Basis von aktuellen Daten erstellt, wobei eine Berücksichtigung einer Alt-Prognose den Einfluss von begründeten Erfahrungen auf die neu zu erstellende Prognose darstellt. Da eine Niedrigtarif-Periode in der Regel nur einmal über einen Gesamt-Regelungszyklus bzw. im Lauf von 24 Stunden freigeschaltet wird, so wird eine Prognose auch nur einmal erstellt. Bei mehreren Niedrigtarif-Perioden oder Schwachlastzeiten kann das Verfahren bei entsprechender Anpassung auch mehrmals innerhalb eines Gesamt-Regelungszyklus einer Heizungsanlage durchgeführt werden, beispielsweise zur Überprüfung einer aktuell gestellten Wärmebedarfs-Prognose.

Eine erfindungsgemäß ausgebildete Vorrichtung ist dementsprechend ausgebildet, so dass eine erfindungsgemäße Aufladung an einem jeweiligen aktuell als Prognose ermittelten Wärmebedarf orientiert geführt wird. Damit stellt eine erfindungsgemäße Vorrichtung eine Abkehr von dem bekannten, rückblickend verbrauchsorientierten Regelungskonzept nach dem Stand der Technik dar. Geänderte Randbedingungen können in ein erfindungsgemäßes Verfahren damit schneller und insbesondere ohne Einfluss der thermischen Trägheit eines Gesamtsystems einfließen. Dadurch wird eine genauere und energie- sowie kosteneffizientere Regelung ermöglicht.

In einer Weiterbildung der Erfindung wird eine Wärmeenergie-Bedarfsprognose jeweils gerätespezifisch umgesetzt, so dass ein erfindungsgemäßes Verfahren und eine Vorrichtung zur Umsetzung dieses Verfahrens universell über eine Gerätemodellreihe hinaus einsetzbar ist. Eine jeweilige Umsetzung der vorliegenden Prognose erfolgt dann unter Berücksichtigung der gerätespezifischen Besonderheiten, wie beispielsweise zulässiger maximaler elektrischer Stromfluss, maximale Wärmekapazität des Wärmespeicherelementes etc. Derartige, vorstehend nur beispielhaft genannte Gerätespezifika werden dann bei der Umsetzung einer jeweiligen Prognose durch Ausgestaltung eines Ladevorgangs und einer Entladung des Wärmespeichers und insbesondere der Entladesteuerung zur Wärmeabgabe berücksichtigt. Hierbei kann dann an einem Wärmespeicher auch eine Unterscheidung bezüglich der Art der Entladung in dynamische und statische Wärmeentladung mit einer entsprechenden Gewichtung vorgenommen werden. Da eine statische Wärmeentladung durch Strahlung, wie auch durch Leitung und freie Konvektion prinzipiell am Wärmespeicher durch Regelungseinflüsse weitgehend nicht beeinflussbar ist, die jedoch von einem jeweiligen Wärmespeicher und seiner Isolierung und eventuellen Alterungseinflüssen in einer Heizungsanlage abhängen, wird durch einen gerätespezifischen Ansatz die Regelungsgenauigkeit ganz wesentlich erhöht.

Bei einer raumtemperaturgeführten und erfindungsgemäß auf einer Wärmebedarfs-Prognose aufbauenden Aufladung eines Wärmeenergiespeichers wird in Abhängigkeit von einem jeweiligen Wärmeenergiespeicher insbesondere eine Anpassung einer Abschalttemperatur vorgesehen. Eine Auslegung eines jeweiligen Wärmeenergiespeichers erfolgt im wesentlichen im Hinblick auf einen maximalen Wärmebedarf. Eine erforderliche Wärmekapazität eines jeweiligen Wärmeenergiespeichers kann durch die Akzeptanz sog. Tagnachladungen gesenkt werden, wie nachfolgend noch ausgeführt wird.

In einer bevorzugten Ausführungsform der Erfindung baut eine neu zu erstellende Wärmeenergie-Bedarfsprognose auf einer zeitlich vorangehenden Alt-Prognose auf. Hierdurch wird durch mindestens teilweise Übernahme eines vorangehenden Wertes einerseits eine Abkürzung eines umfangreicheren Rechenverfahrens bewirkt. Andererseits haben langfristig angestellte Untersuchungen an realen Anlagen jedoch auch gezeigt, dass zwischen zwei aufeinanderfolgenden Regelungszyklen bzw. zwei aufeinanderfolgenden Tagen keine starken Schwankungen hinsichtlich eines Wärmebedarfs auftreten.

Die vorstehend angegebene Erkenntnis wird in einem erfindungsgemäßen Verfahren in einer wesentlichen Weiterbildung dadurch vorteilhaft genutzt, dass eine neue Wärmeenergie-Bedarfsprognose von der Prognose eines vorangehenden Regelungszeitraumes bzw. eines vorangehenden Tages nur um einen bestimmten maximalen Wert abweichen darf. Es wird mithin ein Grenzwert definiert, der durch den Betrag der Differenz zwischen einer neuen Prognose und der zugehörigen Alt-Prognose nicht überschritten werden darf. Dieser Grenzwert stellt zudem sicher, dass es auch bei unerwartetem Benutzerverhalten oder starken Schwankungen der Außentemperatur zu keiner falschen Prognose kommt, in Folge deren ein Anwender am nächsten Tag sogar gar keine nutzbare Wärmeenergie zur Verfügung haben könnte.

Der vorstehend definierte Grenzwert kann empirisch ermittelt und damit fest vorgegeben werden. Vorteilhafterweise wird jedoch für eine Heizungsanlage lediglich ein Startwert vorgegeben, wodurch der nachfolgende Betrieb an die jeweiligen Umgebungs- und Randbedingungen angepasst werden kann, beispielsweise innerhalb eines selbstlernenden Systems.

In einer besonders vorteilhaften Weiterbildung der vorliegenden Erfindung wird im Rahmen der Bestimmung einer neuen Prognose eine Bewertung der Alt-Prognose auf Basis bestimmter Kriterien durchgeführt. Dadurch wird eine Verbesserung der Neu-Prognose gegenüber der Alt-Prognose bewirkt, die jedoch unter Berücksichtigung von Änderungen bestimmter Randparameter beeinflusst wird. Da sich, wie bereits vorstehend angegeben, ein Wärmebedarf zwischen zwei aufeinanderfolgenden Regelungszyklen nur geringfügig ändert, sich jedoch eine Außentemperatur und davon grundsätzlich abhängig auch eine Innenraumtemperatur über einen Monat oder ein Jahr gesehen jedoch beträchtlich ändern, werden mit diesem Merkmal sehr effektive Korrekturmaßnahmen geschaffen. Dazu kann in einer Weiterbildung der Erfindung insbesondere auch durch eine äußere Information auf Tage mit reduziertem Wärmebedarf beispielsweise durch ein spezielles Signal einer externen Schaltuhr hingewiesen und/oder ein interner Kalender geführt werden, der beispielsweise Regelungszyklen nach Werktagen und Wochenenden oder Feiertagen bzw. Betriebsferien unterscheiden kann. An Werktagen ist durch das Arbeiten von Maschinen und/oder die Anwesenheit von Menschen mit einem zusätzlichen Wärmeeintrag in einem Innenraum zu rechnen, wobei jedoch durch Frischluftzufuhr und/oder Luftaustausch in Räumen ein erhöhter Wärmebedarf zu verzeichnen ist. Demgegenüber wird zu arbeitsfreien Perioden bei generell geringerem Luftaustausch und stark reduziertem Wärmeeintrag eventuell auch ein reduziertes Temperaturniveau zwecks Kosteneinsparung erwünscht sein.

In einer vorteilhaften Weiterbildung der Erfindung wird als Kriterium für die Bewertung der Alt-Prognose eine Erreichung des Raumtemperatur-Sollwertes während der vorangehenden Regelperiode im Mittel ausgewertet. Hierbei steht eine Betrachtung des Wärmebedarfs im Mittelpunkt, so dass eine lineare Mittelwertbildung herangezogen wird. Es ist wichtig, dass sich positive und negative Komponenten aufheben, da nur in dem Fall eine korrekt eingestellte Wärmemenge im Wärmespeicher vorhanden war, wenn sich der Mittelwert zu Null ergibt. Die einzelnen Abweichungen von den jeweils vorgegebenen Sollwerten sind dann im wesentlichen auf die begrenzte Geschwindigkeit der Regelung der Temperatur in einem Raum zurückzuführen.

In einem Ausführungsbeispiel der Erfindung wird zur Kontrolle und Bewertung des Entladereglers zusätzlich eine quadratische Mittelwertbildung aus einer Differenz zwischen Raum-Soll-Temperatur und Raum-Ist-Temperatur herangezogen, so dass sich Überschreitungen und Unterschreitungen nicht gegenseitig aufheben können, und jede deutliche Abweichung von einem Nullwert Anlass zu einer Überarbeitung der Entladeregelung gibt. Ein Vorzeichen für diese Untersuchung wird vorzugsweise durch den linearen Mittelwert gebildet.

Als weiteres, sehr vorteilhaftes Kriterium wird in einer Ausführungsform der vorliegenden Erfindung überwacht, wie häufig der Wärmespeicher untertags und insbesondere zu Hochtarif-Perioden nachgeladen worden ist. Derartige Nachladungen sind im Regelfall wesentlich teurer als eine Aufladung während der Niedrigtarif-Periode. Daher sind Zwischenaufladungen während einer Hochtarif-Periode schon aus Wirtschaftlichkeitsgründen zu reduzieren. Als zusätzliches Bewertungskriterium kann hierbei auch die Dauer einer jeweiligen Zwischennachladung zu Hochtarif-Zeitpunkten als Gewichtungsfaktor mit einfließen. Damit werden Bewertungsgewichtungen bei der Güteermittlung einer Alt-Prognose bereitgestellt, die die Wirtschaftlichkeit einer neuen Prognose erhöhen.

In einer bevorzugten Ausführungsform der Erfindung wird als weiteres Kriterium bei einer rückblickenden Güte-Bewertung einer Alt-Prognose ein Entladungsgrad des Wärmespeichers betrachtet bzw. ausgewertet. Durch dieses Kriterium ist nun auch erkennbar, dass eine Prognose zu einem niedrigeren Wärmebedarf hin geändert werden muss. Die vorhandene Restladung gibt einen Anhaltspunkt für eine Minderaufladung bzw. eine Senkung des Wärmebedarfs durch eine neue Prognose. Damit ist quasi ein Gegenspieler zu der vorstehend angegebenen linear gemittelten Regelabweichung geschaffen worden, durch die nur eine aufgrund der vorangehenden Prognose eingetretene Unterdeckung eines Wärmebedarfs und mithin eine Erhöhung der Prognose festgestellt wird. Hierdurch wird ferner auch der an sich bekannten Tatsache Rechnung getragen, dass gegen Ende einer Normal- bzw. Hochtarif-Periode der Wärmevorrat in einem Wärmespeicher auf ein Minimum herabgesetzt sein muss, um ein Maximum an Wärmeenergie während der Periode mit Niedrigtarif-Preisbindung umsetzen zu können. Damit kennzeichnet eine möglichst geringe Rest-Wärmeenergiemenge in dem Wärmespeicher eine möglichst effiziente Ressourcennutzung und mithin eine fast optimale Prognose über einen erwarteten Erwärmbedarf. Bei einem optimal eingestellten und arbeitenden Verfahren sollte nur noch eine bestimmte Restladung an Wärmeenergie in dem Wärmespeicher vorhanden sein, die als Wärmeenergiemenge generell gerätespezifisch zu bestimmen ist, jedoch in der Regel mit einer Resttemperatur des Kerns von ca. 100°C korreliert.

In einer Ausführungsform der Erfindung ist ein durch den Benutzer zu betätigender Schalter vorgesehen, durch den die Heizanlage auch im Rahmen der Hochtarifzeit eine Freigabe zum Nachladen des Wärmespeichers erhält. In diesem Fall ist dann nur bei der eingeschalteten Option Tagnachladung auch ein Nachlade-Kriterium ausführbar, so dass im Fall, dass eine Ist-Raumtemperatur über einen längeren Zeitraum, insbesondere bei voller Lüfterdrehzahl der Heizungsanlage unterhalb eines Soll -Wertes liegt, bei Unterschreitung eines empirisch vorgegebenen zweiten Grenzwertes eine Nachladung möglich ist. In Abhängigkeit von der jeweiligen Infrastruktur des Energieversorgungsunternehmens ist es grundsätzlich nicht negativ bzw. wirtschaftlich nachteilig, Tagnachladungen vorzusehen. Zur Unterscheidung zwischen Hochtarif- und Regel- bzw. Niedrigtarif-Perioden kann durch ein Energieversorgungsunternehmen ein besonderer Schaltimpuls ausgesandt werden, der Schwachlastzeiten auch außerhalb einer Nachtphase flexibel als Niedrigtarif-Perioden in einer Weise kennzeichnen kann, die von bekannten Heizungsanlagen ausgewertet und umgesetzt werden könnten. Ein Beispiel hierfür ist Frankreich. Hier werden auch über Tag in Abhängigkeit von dem Auftreten verschiedener Schwachlastzeiten Niedrigtarif-Perioden mit teilweiser flexibler Länge vorgesehen. In einem solchen Fall ist auch eine Bewertung einer Tagnachladung in einem gesamten Steuerungskonzepts anzupassen, dass eine Tagnachladung nicht generell negativ bewertet wird. Derartige Niedrigtarif-Perioden treten während der Hochtarifzeitzone meist zu festen Zeitpunkten auf, so dass sie entsprechend für die Möglichkeit einer Nachladung fest eingeplant werden können, und dementsprechend als Ausweich-Nachladezeiten in dem Regelungskonzept berücksichtigt werden können. Mit der Signalisierung des Starts einer Niedrigtarif-Zeitzone innerhalb von Hochtarif-Zonen wäre es so z.B. möglich, eine aktuell geltende Prognose zu überprüfen und auch eventuell eine Restladung im Wärmeenergiespeicher zu bestimmen, um ggf. eine Nachladung in einem Niedrigtarif außerhalb der Nachtstunden durchzuführen. Durch ein derartiges Vorgehen können auch konstruktiv stärkere Begrenzungen der Wärme-Reserven vorgesehen werden, so dass insbesondere auch Wärmeenergiespeicher geringer dimensioniert werden können.

In besonders vorteilhafter Weise wird eine Wärmebedarfs-Prognose im Rahmen einer Rückwärtssteuerung umgesetzt. Diese Rückwärtssteuerung läuft vorzugsweise während der Niedrigtarifzeit unter der Nacht ab. Hierbei ist bei bekannter Aufladekurve sowie bekannter Kerntemperatur des Wärmeenergiespeichers zu niedrigen Energiepreisen eine Startzeit vorgegeben, so dass ein erwünschter Aufladungsgrad mit dem Ende der Niedrigtarif-Periode und dem Beginn einer geregelten Heizperiode während der Hochpreis-Periode definiert und genau erreicht wird.

Wie vorstehend mit Ausführungsbeispielen und diversen Weiterbildungen vorgestellt und offenbart ist, wird ein erfindungsgemäßes Verfahren über einen Zyklus bzw. einen Zeitraum von jeweils 24 Stunden zwischen einer alten und einer neuen Prognose für einen Wärmeenergiebedarf beobachtet. Auf Basis dieser Beobachtung mit einer oder mehreren entsprechenden Bewertungen werden die Kriterien für die Erstellung einer nächsten Prognose ausgewertet. Da es sich hier um Erfahrungsregeln handelt, ist bei der Umsetzung eines derartigen Verfahrens grundsätzlich auch eine Fuzzy-Logik einsetzbar. Ein erfindungsgemäßes Verfahren und eine Vorrichtung zu dessen Ausführung sind also insbesondere selbstlernend, so dass eine kontinuierlich laufende, selbstständige Anpassung an die individuellen wärmetechnischen Gegebenheiten eines Raumes verwirklicht wird. Bei einer Fuzzy-Umsetzung würde ein Regler durch Regeln der Form:

wenn Restladung im Wärmespeicher gering unterschritten, dann stärker aufladen;

wenn zulässige Tagnachladung überschritten,
dann deutlich stärker aufladen;

wenn mittlere Temperaturabweichung größer als ein Toleranzwert ist,
dann ermittle, ob Temperaturabweichung positiv,
dann etwas weniger aufladen;

....

Im Ergebnis kann eine derartige Wertung auch aussagen, dass keine Änderung an der alten Prognose hin zur Einstellung der neuen Wärmeenergie-Bedarfsprognose vorgenommen werden muss.

Zusätzlich vorteilhaft ist die Verarbeitung von Wetterprognosen, die über ein zusätzliches Gütekriterium in die Regelung einfließen. Ein Empfänger erhält dabei Vorhersage-Daten über das Wetter (Radio, Internet, Funk), woraus ein Gütekriterium derart gebildet wird, dass z.B. mit steigender Temperatur bei der Wettervorhersage das Gütekriterium "Wetter" durch einen Wert vermindert wird. Mit steigender vorhergesehener Temperatur erfolgt somit eine negative Beeinflussung der Wärmeenergiebedarfs-Prognose für die Aufladung des Wärmespeichers, der somit weniger stark aufgeladen wird. Analog können Wind, Regen und andere Daten verarbeitet werden. Bei steigender vorhergesehener Windgeschwindigkeit erfolgt eine Erhöhung der Aufladung bzw. ein entsprechender Einfluss auf die Regelung.

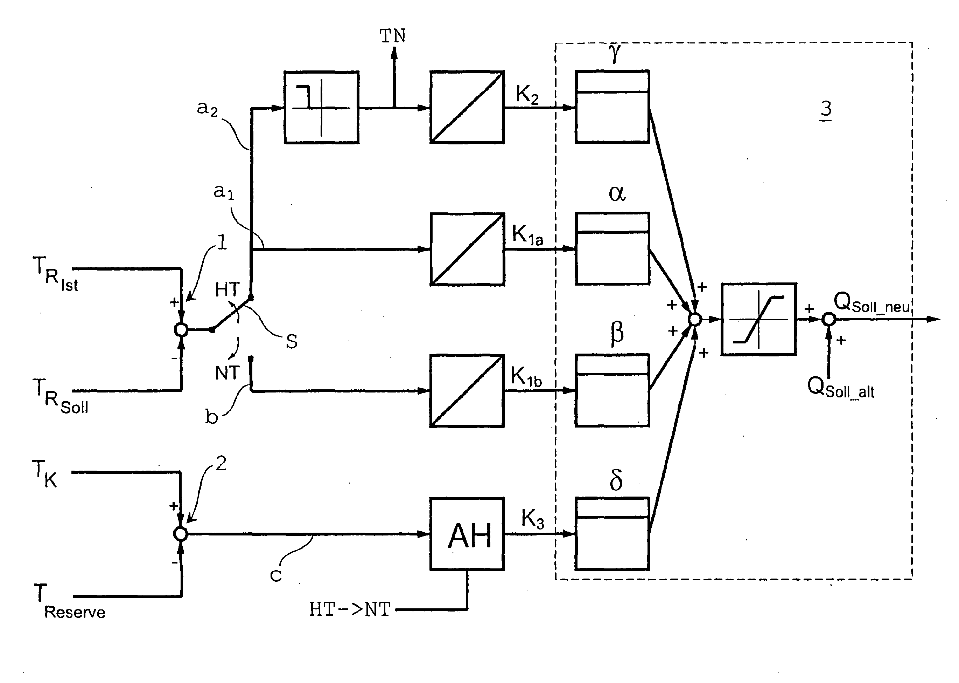

Nachfolgend werden weitere Vorteile eines erfindungsgemäßen Verfahrens und einer entsprechenden Vorrichtung zum Steuern einer elektrischen Heizungsanlage mit mindestens einem Wärmespeicher anhand eines Ausführungsbeispiels näher erläutert. In der Zeichnung zeigt die Figur ein regelungstechnisches Schema einer Vorrichtung mit Mitteln zur Verarbeitung und Erstellung verschiedener Gütekriterien, auf deren Basis aus einem Wert einer Alt-Prognose $Q_{Soll\_alt}$ eine neue Wärmeenergie-Bedarfsprognose $Q_{Soll\_neu}$ erstellt wird. Die einzelnen Mittel können dabei nach Wahl des Fachmanns diskret, z.B. als Analogrechner, oder aber als Programm-Module ausgebildet sein, die in einem Rechner realisiert und abgearbeitet werden.

An einem Eingang 1 wird fortlaufend eine Differenz zwischen einer Ist-Raumtemperatur $T_{Rist}$ und einer Soll-Raumtemperatur $T_{Rsoll}$ bestimmt. Der Differenzwert wird über einen Schalter S während einer Hochtarif-Periode HT einem Ast $a_1$ und zur Ermittlung eines Wertes für ein Gütekriterium $K_{1a}$ zugeführt. Dieser Wert bildet über die Zeitdauer der Hochtarifperiode HT hinweg aus einer Summe im wesentlichen gleichgetaktet abgenommener Temperaturdifferenzwerte über einen linearen Mittelwert einen Wert, der eine Temperaturabweichung von den jeweiligen Sollwerten während der Hochtarif-Periode HT repräsentiert. Das Gütekriterium $K_{1a}$ wird mit einem Wert $\alpha$ gewichtet und in die Ausgangsgröße $(k_{1a} \cdot \alpha)$ gewandelt.

Im Fall einer Niedrigtarif-Periode NT wird durch den Schalter S am Eingang 1 das Differenzsignal auf einen Ast b gelenkt. Das Gütekriterium $K_{1b}$ wird dort in analoger Weise mit dem Wert $\beta$ zu einem Ausgangswert ($K_{1b} * \beta$) verarbeitet, womit $K_{1b}$ mit $\beta$ gewichtet zur Repräsentation einer gewichteten Temperaturabweichung während der Niedrigtarif-Periode NT herangezogen wird. Hierin werden auch zusätzliche Tarifinformationen berücksichtigt, wie z.B. in Schwachlast-Zeiten durch einen Energieversorger ausgelöste Niedrigtarif-Zeitschlitze innerhalb einer Hochtarif-Periode HT, also außerhalb der Nacht-Stunden. In jedem Fall umfasst ein gesamter Zyklus aus Hochtarif- und Niedrigtarif-Perioden NT+HT einen Zeitraum von 24 Stunden, während dem die Heizungsanlage in verschiedenen Betriebszuständen aktiv ist.

Dabei ist zu beachten, dass es während einer Niedrigtarif-Periode NT, also vor allem während der Nachtstunden, insbesondere im Fall einer erwünschten Temperatur-Nachtabsenkung alleine schon durch die statische Wärmeabgabe aus dem Wärmespeicher an dem Raum zu einer permanenten positiven Temperaturabweichung kommen kann. Eine derartige Abweichung darf in keiner Weise so stark bewertet werden, wie eine entsprechend negative Temperaturabweichung während einer Hochtarif-Periode HT, da eine derartige Abweichung insbesondere über Tag als störend empfunden werden würde. Dieser Punkt erklärt auch, dass zwei Gütekriterien $K_{1a}$ und $K_{1b}$ je mit den Werten $\alpha$ und $\beta$ gewichtet zu Ausgangsgrößen ($_{1a} * \alpha$) und ($K_{1b} * \beta$) gewandelt werden und jeweils nur eine Temperaturabweichung repräsentieren.

Ferner wird das Temperatur-Differenzsignal am Eingang 1 über den Schalter S bei Hochtarif-Periode HT auch einem Ast $a_2$ zugeführt, der im Fall einer zulässigen Tagnachladung TN bzw. Hochtarif-Periodennachladung die über die Regelungsperiode hinweggesehen erforderlichen Nachladevorgänge zählt und das Gütekriterium $K_2$ mit dem Wert $\gamma$ gewichtet als Ausgabewert weitergeleitet wird.

Nur bei einem Übergang von Hochtarif HT auf Niedrigtarif NT wird eine Kerntemperatur $T_K$ des Wärmespeichers mit einer gerätespezifisch vorgegebenen Minimumtemperatur $T_{Reserve}$ an einem Eingang 2 von einem Abtast-Halteglied AH erfasst und in Form eines Gütekriteriums $K_3$ mit einem Wert $\delta$ in ein Ausgangssignal gewandelt.

Damit ergibt sich unter der Randbedingung, dass

$$|Q_{Soll\_neu} - Q_{soll\_alt}| \leq \epsilon,$$

also der Betrag einer Differenz zwischen einem neuen Wärmeenergie-Bedarfsprognosewert $Q_{Soll\_neu}$ und einer Alt-Prognose $Q_{soll\_alt}$ einen vorgegebenen Grenzwert $\epsilon$ nicht überschreitet, eine neue Wärmeenergie-Bedarfsprognose $Q_{Soll\_neu}$ zu:

$$Q_{Soll\_neu} = Q_{Soll\_alt} + \alpha^* K_{1a} + \beta^* K_{1b} + \gamma^* K_2 + \delta^* K_3.$$

Diese neue Wärmeenergie-Bedarfsprognose $Q_{Soll\_neu}$ wird dann in der nicht weiter dargestellten elektrischen Heizungsanlage unter gerätespezifischer Anpassung zur Aufladung mindestens eines Wärmespeichers durch Zufuhr einer bestimmten Wärmeenergiemenge umgesetzt.

Nach einem Übergang von einer Hochtarif-Periode HT auf eine Niedrigtarif-Periode NT werden alle in der Skizze der Figur dargestellten Integratoren zurückgesetzt und eine Bestimmung der Gütekriterien $K_{1a}$ bis $K_3$ beginnt in der vorstehend beschriebenen Weise von neuem zu laufen. In jedem Fall war eine vorangehende Prognose dann ideal, wenn die Gütekriterien den Wert Null annehmen. Je schlechter die Güte der vorangehenden Prognose im Hinblick auf die genannten Kriterien war, desto deutlicher weichen die Werte jeweils von Null ab. Die Gütekriterien $K_{1a}$ bis $K_3$, die mit den Werten $\alpha$, $\beta$, $\gamma$ und $\delta$ gewandelt werden, stellen im vorliegenden Beispielsfall Ausgangsgrößen einer Rechenvorschrift eines analogen Reglers 3 dar, die eine jeweilige Stärke der Gewichtung der zugehörigen Gütekriterien bei einer Korrektur einer Altprognose $Q_{Soll\_alt}$ im Zuge der Bestimmung einer neuen Wärmeenergie-Bedarfsprognose $Q_{Soll\_neu}$ bestimmen.

Eine derartige mathematisch konkret durchgeführte Berechnung eines neuen Wärmeenergie-Bedarfsprognosewertes $Q_{Soll\_neu}$ entfällt selbstverständlich im Fall der Verwendung einer Fuzzy-Logik, wie in der Figur durch den gestrichelt eingezeichneten Kasten des Reglers 3 angedeutet. Ausgabewert bleibt hingegen der neue Wärmeenergie-Bedarfsprognosewert $Q_{Soll\_neu}$, der nachfolgend gerätespezifisch zur Nachladung eines oder mehrerer Wärmespeicher umgesetzt wird.

**Patentansprüche**

1. Verfahren zum Steuern einer elektrischen Heizungsanlage mit mindestens einem Wärmespeicher, **gekennzeichnet**

**durch** die Schritte:

- Erstellen einer Prognose zu Beginn einer Niedrigtarif-Periode über den Wärmebedarf einer nächstfolgenden Heiz- oder Raumtemperatur-Regelperiode auf der Basis aktueller Parameterwerte als Neu-Prognose ($Q_{Soll\_neu}$), wobei

    o eine Alt-Prognose ($Q_{Soll\_alt}$) als Prognose über den Wärmebedarf einer zurückliegenden Heiz- bzw. Raumtemperatur-Regelperiode zugrunde gelegt wird und
    o die Neu-Prognose ($Q_{Soll\_neu}$) aufbauend auf der Alt-Prognose ($Q_{Soll\_alt}$) erstellt wird.

- und Führen einer Aufladung des mindestens einen Wärmespeichers orientiert an dem als Neu-Prognose ($Q_{Soll\_neu}$) ermittelten Wärmebedarfs.

2. Verfahren nach dem vorhergehenden Anspruch,
**dadurch gekennzeichnet,**
**dass** eine Neu-Prognose ($Q_{Soll\_neu}$) jeweils gerätespezifisch umgesetzt wird.

3. Verfahren nach einem der vorhergehenden Ansprüche,
**dadurch gekennzeichnet,**
**dass** eine Neu-Prognose ($Q_{Soll\_neu}$) von der Alt-Prognose ($Q_{Soll\_alt}$) eines vorangehenden Regelungszeitraumes nur um einen bestimmten maximalen Wert($\varepsilon$) abweichen darf, wobei der maximale Wert als Grenzwert ($\varepsilon$) vorzugsweise empirisch ermittelt und fest vorgegeben oder für den ein Startwert vorgegeben wird und der nachfolgende Betrieb an die jeweiligen Umgebungs- und Randbedingungen angepasst wird, beispielsweise innerhalb eines selbstlernenden Systems.

4. Verfahren nach einem der vorhergehenden Ansprüche,
**dadurch gekennzeichnet,**
**dass** die Bewertung der Alt-Prognose ($Q_{Soll\_alt}$) zur Bestimmung einer Neu-Prognose ($Q_{Soll\_neu}$) auf Basis mindestens eines vorgegebenen Kriteriums durchgeführt wird.

5. Verfahren nach dem vorhergehenden Anspruch,
**dadurch gekennzeichnet,**
**dass** als ein Gütekriterium ($K_1$) für die Bewertung der Alt-Prognose ($Q_{Soll\_alt}$) eine Einhaltung eines Raumtemperatur-Sollwertes ($T_{Rsoll}$) während der vorangehenden Regelperiode im linearen Mittel ausgewertet wird.

6. Verfahren nach dem vorhergehenden Anspruch,
**dadurch gekennzeichnet,**
**dass** zur Unterscheidung in Hochtarif-Zeitzonen (HT) und Niedrigtarif-Zonen (NT) je ein Gütekriterium ($K_{1a}$, $K_{1b}$) ausgewertet wird, wobei insbesondere auch im Rahmen der Hochtarifzeit (HT) durch einen Benutzer eine Freigabe zum Nachladen (TN) des Wärmespeichers gegeben und verarbeitet wird.

7. Verfahren nach einem der vorhergehenden Ansprüche 4 bis 6,
**dadurch gekennzeichnet,**
**dass** als Kriterium ($K_z$) überwacht wird, wie häufig der Wärmespeicher zu Hochtarif-Perioden (HT) nachgeladen worden ist.

8. Verfahren nach einem der vorhergehenden Ansprüche 4 bis 7,
**dadurch gekennzeichnet,**
**dass** als weiteres Kriterium ($K_3$) bei einer Güte-Bewertung einer Alt-Prognose ($Q_{Soll\_alt}$) ein Entladungsgrad des Wärmespeichers ausgewertet wird.

9. Verfahren nach einem der vorhergehenden Ansprüche,
**dadurch gekennzeichnet,**
**dass** eine Neu-Prognose ($Q_{Soll\_neu}$) im Rahmen einer Rückwärtssteuerung umgesetzt wird.

10. Verfahren nach einem der vorhergehenden Ansprüche,
**dadurch gekennzeichnet,**
**dass** bei der Umsetzung des Verfahrens eine Fuzzy-Logik verwendet wird.

**11.** Vorrichtung zum Steuern einer elektrischen Heizungsanlage mit mindestens einem Wärmespeicher, **dadurch gekennzeichnet,** **dass** die Vorrichtung zur Umsetzung eines Verfahrens nach einem oder mehreren der vorstehenden Ansprüche 1 bis 10 **dadurch** besonders ausgebildet ist, dass Mittel zum Erstellen einer Neu-Prognose über den Wärmeenergiebedarf ($Q_{Soll\_neu}$) einer nächstfolgenden Heiz- bzw. Raumtemperatur-Regelperiode, Mittel zur Bewertung einer Alt-Prognose ($Q_{Soll\_alt}$) auf Basis mindestens eines Kriteriums als Eingangsgröße und Mittel zum Einstellen einer dementsprechenden Wärmeenergiemenge vorgesehen sind.

**12.** Vorrichtung nach dem vorhergehenden Anspruch, **dadurch gekennzeichnet,** **dass** sie als Regler (3) einen Fuzzy-Regler als selbstlernendes System umfasst.

**Claims**

**1.** Process for the control of an electrical heating plant with a minimum of one heat accumulator, identified by the steps:

- Generation of a forecast at the beginning of a low-tariff period concerning the heat requirement of a next-following heating or room temperature control period, on the basis of current parameter values, as a new forecast ($Q_{setpoint\_new}$), where

    o an old forecast ($Q_{setpoint-old}$) is taken as a basis as a forecast concerning the heat requirement of a past heating and room-temperature control period and
    o the new forecast ($Q_{setpoint\_new}$) is generated building on the old forecast ($Q_{setpoint\_old}$),

- and the maintenance of a charge of the minimum one heat accumulator oriented to the heat requirement determined as a new forecast ($Q_{setpoint\_new}$).

**2.** Process according to the preceding demand, **characterized in that**, a new forecast ($Q_{setpoint\_new}$) is applied device-specific in each case.

**3.** Process according to one of the preceding claims, **characterized in that**, a new forecast ($Q_{setpoint\_new}$) may deviate from the old forecast ($Q_{setpoint\_old}$) of a preceding control time period by a pre-determined maximum value ($\varepsilon$) only, where the maximum value is preferably empirically determined as a limit value ($\varepsilon$) and is fixed stipulated, or for which an initial value is stipulated and the following operation is adapted to the respective environmental and boundary conditions, for example within a self-learning system.

**4.** Process according to one of the preceding claims, **characterized in that**, the evaluation of the old forecast ($Q_{setpoint\_old}$) for the determination of a new forecast ($Q_{setpoint\_new}$) is carried out on the basis of at least one specified criterion.

**5.** Process according to the preceding claim, **characterized in that**, as a control criterion ($K_1$) for the evaluation of the old forecast ($Q_{setpoint\_old}$), compliance with a room temperature setpoint value ($TR_{setpoint}$) during the preceding control period is evaluated as a linear average.

**6.** Process according to the preceding claim, **characterized in that**, for the differentiation into high-tariff time zones (HT) and low-tariff time zones (LT) a control criterion ($K_{1a}$, $K_{1b}$) is evaluated, where, in particular also within the framework of the peak tariff period (HT), an approval for the recharging (TN) of the heat accumulator is given by a user and processed.

**7.** Process according to one of the preceding claims 4 to 6, **characterized in that**, as a criterion ($K_2$) it is monitored how frequently the heat accumulator was recharged for high-tariff periods (HT).

**8.** Process according to one of the preceding claims 4 to 7,
**characterized in that**,
as a further criterion ($K_3$), in case of a quality evaluation of an old forecast ($Q_{set-point\_old}$), a degree of discharge of the heat accumulator is evaluated.

**9.** Process according to one of the preceding claims,
**characterized in that**,
a new forecast ($Q_{setpoint\_new}$) is applied within the framework of a backward control.

**10.** Process according to one of the preceding claims,
**characterized in that**,
with the application of the process, fuzzy logic is employed.

**11.** Equipment for the control of an electrical heating plant with at least one heat accumulator,
**characterized in that**,
the equipment for the application of a process, according to one or more of the preceding claims 1 to 10, is developed in particular such that means are provided for the generation of a new forecast concerning the thermal energy requirement ($Q_{setpoint\_new}$) of a next-following heating and room-temperature control period, means are provided for the evaluation of an old forecast ($Q_{setpoint\_old}$) on the basis of at least one criterion as input variable and means are provided for the setting-adjustment of a corresponding thermal energy quantity.

**12.** Equipment according to the preceding claim,
**characterized in that**,
it includes as controller a fuzzy controller (3) as a self-learning system.


**Revendications**

**1.** Procédé de commande d'une installation de chauffage électrique comportant au moins un accumulateur de chaleur,
**caractérisé par** les étapes suivantes :

- établissement d'un pronostic, au début d'une période à tarif bas, concernant le besoin en chaleur d'une période de régulation de la température de chauffage ou de la température ambiante venant immédiatement après, sur la base des paramètres actuels, à titre de nouveau pronostic ($Q_{théo.\_nouv.}$),

o un ancien pronostic ($Q_{théo\_anc.}$) étant pris pour base en tant que pronostic concernant le besoin en chaleur d'une période de régulation de la température de chauffage ou de la température ambiante précédente, et
o le nouveau pronostic ($Q_{théo.\_nouv.}$) étant établi sur la base de l'ancien pronostic ($Q_{théo\_anc.}$),

- et établissement d'une charge de l'accumulateur de chaleur (un au moins), orienté sur le besoin en chaleur déterminé en tant que nouveau pronostic ($Q_{théo.\_nouv.}$).

**2.** Procédé selon la revendication précédente,
**caractérisé en ce**
**qu'**un nouveau pronostic ($Q_{théo\_nouv.}$) est transposé d'une façon spécifique à l'appareil.

**3.** Procédé selon l'une des revendications précédentes,
**caractérisé en ce**
**qu'**un nouveau pronostic ($Q_{théo.\_nouv.}$) ne peut s'écarter de l'ancien pronostic ($Q_{théo.\_anc.}$) d'une période de régulation précédente qu'à concurrence d'une valeur maximum donnée ($\varepsilon$), la valeur maximum étant de préférence déterminée empiriquement en tant que valeur limite ($\varepsilon$) et prédéfinie de façon ferme ou une valeur de départ étant définie pour elle, et l'exploitation subséquente étant adaptée aux conditions ambiantes et aux conditions aux limites correspondantes, par exemple à l'intérieur d'un système à auto-apprentissage.

**4.** Procédé selon l'une des revendications précédentes,
**caractérisé en ce que**
l'évaluation de l'ancien pronostic ($Q_{théo\_anc.}$) est réalisée pour déterminer un nouveau pronostic ($Q_{théo.\_nouv.}$) sur la base d'au moins un critère prédéfini.

**5.** Procédé selon la revendication précédente,
**caractérisé en ce que**,
à titre de critère de qualité ($K_1$) pour l'évaluation de l'ancien pronostic ($Qt_{héoanc.}$), un respect de la valeur théorique de la température ambiante ($T_{Rthéo.}$) est évalué en moyenne linéaire pendant la période de régulation précédente.

**6.** Procédé selon la revendication précédente,
**caractérisé en ce que**,
pour faire la distinction entre les zones temporelles à tarif fort (HT) et les zones à tarif bas (NT), un critère de qualité ($K_{1a}$, $K_{1b}$) est évalué pour chacune, une validation pour le rechargement (TN) de l'accumulateur de chaleur étant en particulier donnée et traitée par l'utilisateur également dans le cadre de la période à tarif fort (HT).

**7.** Procédé selon l'une des revendications précédentes 4 à 6,
**caractérisé en ce que**
l'on surveille, à titre de critère ($K_2$), la fréquence à laquelle l'accumulateur de chaleur a été rechargé aux périodes à tarif fort (HT).

**8.** Procédé selon l'une des revendications précédentes 4 à 7,
**caractérisé en ce que**,
comme autre critère ($K_3$), on évalue un degré de déchargement de l'accumulateur de chaleur dans le cadre d'une évaluation de la qualité d'un ancien pronostic ($Q_{théo\_anc.}$).

**9.** Procédé selon l'une des revendications précédentes,
**caractérisé en ce**
qu'un nouveau pronostic ($Q_{théo\_nouv.}$) est transposé dans le cadre d'une rétro-commande.

**10.** Procédé selon l'une des revendications précédentes,
**caractérisé en ce que**,
lors de la transposition du procédé, on utilise une logique floue.

**11.** Dispositif pour la commande d'une installation de chauffage électrique comportant au moins un accumulateur de chaleur,
**caractérisé en ce que**,
pour la transposition d'un procédé selon une ou plusieurs des revendications précédentes 1 à 10, le dispositif est configuré en particulier en ce sens qu'il est prévu des moyens pour établir un nouveau pronostic concernant le besoin en énergie thermique ($Q_{théo.\_nouv.}$) d'une période de régulation de la température de chauffage ou de la température ambiante venant immédiatement après, des moyens pour évaluer un ancien pronostic ($Q_{théo\_anc.}$) sur la base d'au moins un critère à titre de variable d'entrée, et des moyens pour régler une quantité d'énergie thermique en conséquence.

**12.** Dispositif selon la revendication précédente,
**caractérisé en ce**
qu'il comporte, en tant que régulateur (3), un régulateur flou à titre de système à auto-apprentissage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1091250 C
- DE 2539065 B2
- EP 0542653 A1
- DE 4432745 C1